# EUROPEAN PATENT APPLICATION

(11) **EP 3 315 323 A1**
(43) Date of publication of application: **02.05.2018**
(21) Application number: 16814073.9
(22) Date of filing: 18.05.2016
(51) Int. Cl.: B60C 11/00, B60C 1/00, C08K 3/04, C08K 5/25, C08L 7/00, C08L 9/00

(54) **PNEUMATIC TIRE FOR AIRPLANES**

(30) Priority: 23.06.2015 JP 2015126045
(71) Applicant: Bridgestone Corporation, Tokyo 104-8340 (JP)
(72) Inventor: IKUTA, Akifumi, Tokyo 104-8340 (JP)
(74) Representative: Oxley, Robin John George
(86) International application number: PCT/JP2016/064796
(87) International publication number: WO 2016/208302

(57) **Abstract**

Provided is an airplane pneumatic tire whose durability is increased by improvement in heat build-up.

The airplane pneumatic tire includes: a tread section having a plurality of circumferential grooves; a carcass toroidally extending from the tread section to a pair of bead sections through a pair of side wall sections; and a belt composed of at least one belt layer arranged on the outer side of a crown portion of the carcass, wherein, when the maximum width of the belt in the tire width direction is defined as W, a rubber having a 25% modulus at 25°C of not less than 1.2 MPa is arranged in regions of at least 0.2W from each outermost end of the belt toward the tire width direction inner side in the tread section.

## Description

### TECHNICAL FIELD

The present invention relates to an airplane pneumatic tire (hereinafter, also simply referred to as "tire"). More particularly, the present invention relates to an airplane pneumatic tire whose durability is increased by improvement in heat build-up.

### BACKGROUND ART

As compared to ordinary tires of trucks and busses, pneumatic tires of airplanes are used under much faster rotation and heavier load conditions at the time of take-off and landing. When a tire is used in a high inner pressure state under high-speed and heavy-load conditions, an extremely large amount of heat is generated inside the tire. Consequently, peeling failure and rubber destruction and breakdown called blowout caused by reversion may occur in the internal constituents of the tire.

Accordingly, the tread section of an airplane tire has only straight grooves in the circumferential direction such that the tread rubber is not destructed by severe input conditions. Further, since heat generation is suppressed when the tread rubber is less likely to be deformed, its elastic modulus is desired to be high. However, a high elastic modulus leads to a reduction in rubber elongation at the same time; therefore, conventionally, the elastic modulus is controlled within a range where rubber elongation can be ensured.

Under such circumstances, for example, Patent Document 1 proposes a tire for high-speed and heavy-load applications such as airplanes, in which a tread rubber comprising 5 to 100% by mass of a copolymer of a conjugated diene compound and a non-conjugated olefin in a rubber component is used. It is described therein that, by using such a tread rubber, excellent heat build-up resistance, elasticity, ozone resistance and crack propagation resistance can be attained under severe input conditions.

### RELATED ART DOCUMENT

### PATENT DOCUMENT

Patent Document 1: Japanese Unexamined Patent Application Publication No. 2013-155356

### SUMMARY OF THE INVENTION

### PROBLEMS TO BE SOLVED BY THE INVENTION

However, in airplane pneumatic tires having only straight grooves in the circumferential direction, even when the elasticity of the shoulder ribs subjected to the most severe inputs is increased, since deformation such as constant distortion occurs during travel due to the narrow width of the ribs, the effect of the change in elastic modulus is hardly attained. This is also the same for tires using the tread rubber proposed in Patent Document 1. Therefore, in airplane pneumatic tires, a further improvement is currently desired with regard to the problems relating to heat build-up.

In view of the above, an object of the present invention is to provide an airplane pneumatic tire whose durability is increased by improvement in heat build-up.

### MEANS FOR SOLVING THE PROBLEMS

The present inventor intensively studied to solve the above-described problems and consequently discovered that the problems can be solved by arranging a rubber having prescribed physical properties at prescribed positions of the tread section, thereby completing the present invention.

That is, the airplane pneumatic tire of the present invention comprises: a tread section having a plurality of circumferential grooves; a carcass toroidally extending from the tread section to a pair of bead sections through a pair of side wall sections; and a belt composed of at least one belt layer arranged on the outer side of a crown portion of the carcass,
the airplane pneumatic tire being characterized in that, when the maximum width of the belt in the tire width direction is defined as W, a rubber having a 25% modulus at 25°C of not less than 1.2 MPa is arranged in regions of at least 0.2W from each outermost end of the belt toward the tire width direction inner side in the tread section. The "25% modulus at 25°C" is a value determined in accordance with the tensile test of JIS K 6254. The width of the belt is measured in an uninflated state after the tire is fitted to a rim.

In the tire of the present invention, it is preferred that the rubber having a 25% modulus at 25°C of not less than 1.2 MPa is composed of a rubber composition comprising, with respect to 100 parts by mass of (A) a rubber component composed of 50 to 100 parts by mass of a natural rubber and/or a synthetic isoprene rubber and 0 to 50 parts by mass of a synthetic diene-based rubber, 40 to 60 parts by mass of (B) a carbon black and 0.8 to 2 parts by mass of (C) a hydrazide compound represented by the following Formula: 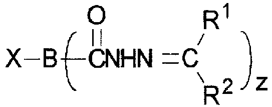 (wherein, B represents a C2 to C18 polyvalent acyclic aliphatic group, a C5 to C20 polyvalent cyclic aliphatic group, a C6 to C18 polyvalent aromatic group, or a C7 to C24 polyvalent alkyl aromatic group; X represents a hydrogen atom, a hydroxy group, an amino group, or a mercapto group; R¹ and R² each independently represent a hydrogen atom, a C1 to C18 alkyl group, a cycloalkyl group, or an aromatic ring; and z represents an integer of 1 to 3).

In the tire of the present invention, it is also preferred that the hydrazide compound is a naphthoic acid hydrazide or a derivative thereof. Further, in the tire of the present invention, it is preferred that the carbon black has a nitrogen adsorption specific surface area of 140 to 200 m²/g. Still further, in the tire of the present invention, it is preferred that the carbon black has a dibutyl phthalate absorption of 120 to 200 mL/100 g. Yet still further, in the tire of the present invention, it is preferred that 1 to 3 parts by mass of zinc white is incorporated with respect to 100 parts by mass of the rubber component.

### EFFECTS OF THE INVENTION

According to the present invention, an airplane pneumatic tire whose durability is improved by suppressing heat build-up can be provided.

### BRIEF DESCRIPTION OF THE DRAWINGS

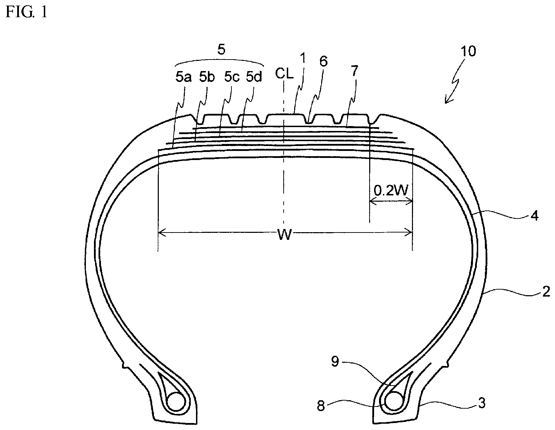

FIG. 1 is a schematic cross-sectional view illustrating an airplane pneumatic tire according to one preferred embodiment of the present invention along the tire width direction.

### MODE FOR CARRYING OUT THE INVENTION

The airplane pneumatic tire of the present invention will now be described in detail referring to the drawing.

FIG. 1 is a schematic cross-sectional view illustrating an airplane pneumatic tire according to one preferred embodiment of the present invention along the tire width direction. A tire 10 illustrated therein comprises: a carcass 4, which toroidally extends from a tread section 1 to a pair of bead sections 3 through a pair of side wall sections 2; and a belt 5, which is composed of at least one belt layer (four belt layers 5a, 5b, 5c and 5d in the illustrated example) arranged on the outer side of a crown portion of the carcass 4, and a plurality of circumferential grooves 6 are arranged in the tread section 1. In the illustrated example, a belt reinforcing layer 7 is arranged on the radial direction outer side of the belt 5. In addition, the carcass 4 is folded around a bead core 8, and a bead filler 9 is arranged on the radial direction outer side of this bead core 8.

In the tire 10 of the present invention, when the maximum width of the belt 5 in the tire width direction is defined as W, a rubber having a 25% modulus at 25°C of not less than 1.2 MPa is arranged in regions of at least 0.2W, preferably 0.3W to 0.5W, from each outermost end of the belt 5 toward the tire width direction inner side. Usually, tires have a larger radius on the width direction center side and the radius decreases toward the width direction outer side. Accordingly, when a tire revolves, its central part covers not less than the travel distance, while the width direction outer part has a shorter radius and is thus dragged. This dragged region contains the regions of 0.2W from each outermost end of the belt 5 toward the tire width direction inner side; therefore, in these regions of the tire 10 of the present invention, the above-described rubber which has an improved elastic modulus in a low-strain range while maintaining the elongation is used. It is preferred that a rubber composition to be made into the above-described rubber through vulcanization exhibits elongation of 450% or more at 25°C.

In conventional airplane pneumatic tires, as illustrated, six or four circumferential grooves 6 are arranged in the tread section 1, and the tread section 1 is divided into a center rib, second ribs and third ribs from the center CL toward the outer side in the tire width direction. When four grooves are arranged, the third ribs are absent. In such tire 10, since the third ribs are the parts that have exactly the same length as the length of one revolution of the tire 10 when six grooves are arranged (the second ribs when four grooves are arranged), the third ribs are hardly deformed and thus shows less wearing than the other ribs. Therefore, the regions where the rubber having a 25% modulus at 25°C of not less than 1.2 MPa is arranged are preferably the regions of the tread section 1 from each tire width direction outermost end of the belt 5 to the outermost circumferential groove 6 in the tire width direction. In other words, in the width of the tread section 1, it is preferred to arrange the above-described rubber in the regions on the outer side of the third ribs in the case of a six-groove tire, or in the regions on the outer side of the second ribs in the case of a four-groove tire. In the tire 10 of the present invention, the above-described rubber may be arranged in the entire tread section 1, or a conventionally used known tread rubber may be arranged in the regions other than the above-described range.

In the tire 10 of the present invention, the rubber having a 25% modulus at 25°C of not less than 1.2 MPa is preferably composed of a rubber composition comprising, with respect to 100 parts by mass of (A) a rubber component composed of 50 to 100 parts by mass of a natural rubber (NR) and/or a synthetic isoprene rubber (IR) and 0 to 50 parts by mass of a synthetic diene-based rubber, 40 to 60 parts by mass of (B) a carbon black and 0.8 to 2 parts by mass of (C) a hydrazide compound represented by the following Formula: 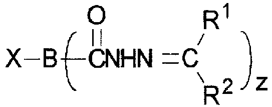 (wherein, B represents a C2 to C18 polyvalent acyclic aliphatic group, a C5 to C20 polyvalent cyclic aliphatic group, a C6 to C18 polyvalent aromatic group, or a C7 to C24 polyvalent alkyl aromatic group; X represents a hydrogen atom, a hydroxy group, an amino group, or a mercapto group; R¹ and R² each independently represent a hydrogen atom, a C1 to C18 alkyl group, a cycloalkyl group, or an aromatic ring; and z represents an integer of 1 to 3).

A vulcanization product of a rubber composition comprising a hydrazide compound represented by the above-described Formula is suitable for improving the tire durability since it not only has low heat build-up, high elasticity and high strength but also shows excellent thermal aging resistance.

Specific examples of the hydrazide compound represented by the above-described Formula include derivatives of 3-hydroxy-2-naphthoic acid hydrazide (HNH), and derivatives of *N*'-(1,3-dimethylbutylidene) salicylic acid hydrazide (BMS), 4-hydroxybenzoic acid hydrazide, anthranilic acid hydrazide and 1-hydroxy-2-naphthoic acid hydrazide. The hydrazide compound is preferably naphthoic acid hydrazide or a derivative thereof. By adding the hydrazide compound in an amount of 0.8 to 2.0 parts by mass, the effects of improving the reversion and thermal aging resistance of the rubber can be balanced with the low heat build-up of the rubber composition.

Examples of the derivatives of 3-hydroxy-2-naphthoic acid hydrazide (HNH) include 3-hydroxy-2-naphthoic acid hydrazides, such as 3-hydroxy-2-naphthoic acid (1-methylethylidene)hydrazide, 3-hydroxy-2-naphthoic acid (1-methylpropylidene)hydrazide, 3-hydroxy-2-naphthoic acid (1,3-dimethylpropylidene)hydrazide and 3-hydroxy-2-naphthoic acid (1-phenylethylidene)hydrazide.

Thereamong, derivatives of 3-hydroxy-2-naphthoic acid hydrazide (for example, trade name "HNH" manufactured by Otsuka Chemical Co., Ltd. corresponds to this compound) and derivatives of *N*'-(1,3-dimethylbutylidene) salicylic acid hydrazide (for example, trade name "BMS" manufactured by Otsuka Chemical Co., Ltd. corresponds to this compound) are preferred because these derivatives enable to keep the Mooney viscosity low while maintaining low heat build-up. Particularly, 3-hydroxy-*N*'-(1,3-dimethylbutylidene)-2-naphthoic acid hydrazide, which is a derivative of 3-hydroxy-2-naphthoic acid hydrazide ("HNH"), is preferred because of its prominent effects and, as a commercially available product thereof, for example, trade name "BMH" manufactured by Otsuka Chemical Co., Ltd. can be suitably used. In the rubber composition according to the tire of the present invention, the hydrazide compound represented by the above-described Formula may be used individually, or two or more thereof may be used in combination.

The rubber component which constitutes the matrix of the rubber composition according to the tire 10 of the present invention is composed of 50 to 100 parts by mass of a natural rubber (NR) and/or a synthetic isoprene rubber (IR) and 0 to 50 parts by mass of a synthetic diene-based rubber different from the IR. The synthetic diene-based rubber is not particularly restricted and can be selected as appropriate in accordance with the intended purpose. Specific preferred examples thereof include styrene-butadiene rubber (SBR), butadiene rubber (BR), acrylonitrile-butadiene rubber (NBR), chloroprene rubber (CR), butyl rubber (IIR), halogenated butyl rubber (X-IIR), and ethylene-propylene-diene copolymer rubber (EPDM). These synthetic diene-based rubbers may be used individually, or two or more thereof may be used in combination. In the rubber component of the rubber composition according to the tire 10 of the present invention, in order to attain low heat build-up, fracture characteristics and wear resistance all at a high level and to maintain good reversion resistance even after thermal aging, it is preferred to incorporate a natural rubber (NR) in an amount of not less than 60 parts by mass, more preferably not less than 70 parts by mass.

Further, in the tire of the present invention, it is preferred that the cis-1,4-bond content is not less than 95% and that a polybutadiene rubber having a weight-average molecular weight of 5.5 × 10⁵ to 20 × 10⁵ is contained in an amount of 60% by mass or less. By using a high-cis polybutadiene rubber, the wear resistance of the tread rubber can be further improved even at high temperatures exceeding 200°C as well as in a temperature range of 200°C and lower.

In the rubber composition according to the tire 10 of the present invention, the carbon black is not particularly restricted, and any carbon black can be selected as appropriate from those that are conventionally and commonly used as a filler for rubber reinforcement. Examples of the carbon black include FEF, SRF, HAF, ISAF and SAF, among which HAF, ISAF and SAF are preferred because of their excellent wear resistance. The carbon black is incorporated in an amount of 40 to 60 parts by mass with respect to 100 parts by mass of the rubber component.

In the rubber composition according to the tire 10 of the present invention, the carbon black has a nitrogen adsorption specific surface area (N₂SA) of preferably 140 to 200 m²/g, more preferably 140 to 160 m²/g. Good wear resistance is attained when the N₂SA of the carbon black is 140 m²/g or larger whereas the carbon black shows good dispersion in the rubber composition when the N₂SA of the carbon black is 200 m²/g or smaller, and such carbon black does not adversely affect the heat build-up resistance of the resulting tire 10. The nitrogen adsorption specific surface area (N₂SA) is a value measured in accordance with ASTM D3037-88 and means the nitrogen adsorption specific surface area per unit weight (m²/g).

Further, in the rubber composition according to the tire 10 of the present invention, the carbon black has a dibutyl phthalate (DBP) absorption of preferably 120 to 200 mL/100 g, more preferably 130 to 160 mL/100 g. Good wear resistance is attained when the DBP absorption of the carbon black is 120 mL/100 g or greater, and the heat build-up resistance is not adversely affected when the DBP absorption of the carbon black is 200 mL/100 g or less. The dibutyl phthalate (DBP) absorption of the carbon black is a value measured in accordance with ASTM D2414 and means the amount (mL) of dibutyl phthalate absorbed per 100 g of the carbon black.

It is preferred that the rubber composition according to the tire 10 of the present invention contains zinc white (ZnO). By incorporating zinc white into the rubber composition, the chevron-cut resistance and wear resistance of the tread rubber can be improved. Zinc white is preferably incorporated in an amount of 1 to 3 parts by mass with respect to 100 parts by mass of the rubber component. By incorporating zinc white in an amount of 1 part by mass or greater, the effect of improving the chevron-cut resistance of the tread rubber is exerted prominently. Meanwhile, by incorporating zinc white in an amount of 3 parts by mass or less, the effect of improving the wear resistance of the tread rubber is exerted prominently not only at high temperatures but also in a temperature range of 200°C and lower.

In the rubber composition according to the tire 10 of the present invention, additives that are normally used in the rubber industry, such as other fillers (e.g., silica), softening agents, other vulcanizing agents (e.g., sulfur), vulcanization accelerators, antioxidants and stearic acid, can be selected as appropriate and further incorporated within a range that does not adversely affect the object of the present invention. As these additives, commercially available products can be suitably used. The rubber composition can be produced by adding a variety of additives that are appropriately selected as required to the rubber component and subsequently, for example, kneading, heating and extruding the resultant.

Other structures of the airplane pneumatic tire of the present invention are not particularly restricted as long as the constitution of the tread section satisfies the above-described requirements, and any known structure can be adopted. Further, the production method thereof is also not particularly restricted, and the airplane pneumatic tire of the present invention can be produced by an ordinary method. That is, the above-described rubber composition in an unvulcanized state is processed into a tread section, and members made of other unvulcanized rubber that are usually used in the tire production, such as a carcass layer and a belt layer, are sequentially laminated, after which the drum is removed to obtain a green tire. Then, this green tire is heat-vulcanized in accordance with a conventional method, whereby a desired tire can be produced.

### EXAMPLES

The present invention will now be described in more detail by way of examples thereof.

### <Examples 1 to 5 and Comparative Examples 1 to 5>

Tires of the type illustrated in FIG. 1 (tire size: 1270×455R22 32PR), in which the rubber compositions shown in Tables 1 and 2 were each arranged in the respective regions of the tread section as shown in these Tables, were produced. The elastic modulus and elongation at break of each rubber composition and the temperature increase and durability of the thus obtained tires in a drum test, all of which are shown in Tables 1 and 2, were evaluated by the following procedures.

### <Elastic Modulus>

For samples obtained by vulcanizing each rubber composition at 135°C for 60 minutes, the elastic modulus (M25) of the rubber at 25% elongation was measured at 25°C in accordance with JIS K 6251:2010.

### <Elongation at Break>

For samples obtained by vulcanizing each rubber composition at 135°C for 60 minutes, the elongation at break (EB) of the rubber at 25°C was measured in accordance with JIS K 6251:2010. The thus obtained results were indicated by indices, taking the value of Comparative Example 1 as 100.

### <Drum Test>

Each tire was fitted to a prescribed rim, inflated to a prescribed inner pressure, and then subjected to a drum test at a prescribed load. As for the conditions thereof, acceleration was made from 0 km/h at the start of the test to 360 km/h in 65 seconds. Further, taking into account the takeoff of an airplane, the load was set at 0 during the period from 63 to 66 seconds from the start of the test. Under these conditions, the temperature increase and the number of tests until breakdown of the tire were verified. The temperature increase (°C) was measured after the drum was stopped at a depth of 20 mm from the center of the shoulder section with respect to the width direction. The number of tests until breakdown was indicated by an index, taking the value of Comparative Example 1 as 100. The obtained results are also shown in Tables 1 and 2.

**[Table 1]**

| | Example 1 | Example 2 | Example 3 | Example 4 | Example 5 |
|---|---|---|---|---|---|
| Natural rubber (NR) | 80 | 60 | 100 | 70 | 80 |
| Polybutadiene rubber (BR) | 20 | 40 | - | 30 | 20 |
| Carbon black (ISAF) | 45 | 45 | 45 | 45 | 45 |
| Antioxidant (6PPD) | 1 | 1 | 1 | 1 | 1 |
| Wax | 1 | 1 | 1 | 1 | 1 |
| Stearic acid | 2 | 2 | 2 | 2 | 2 |
| Zinc white | 2 | 2 | 2 | 2 | 2 |
| Antioxidant (TMDQ) | 0.3 | 0.3 | 0.3 | 0.3 | 0.3 |
| Vulcanization accelerator (CBS) | 1 | 1 | 1 | 1 | 1 |
| Sulfur | 2 | 2 | 2 | 2 | 2 |
| Process oil | - | - | - | - | - |
| Fatty acid zinc | 3 | 3 | 3 | 3 | 3 |
| Hydrazide compound (BMH) | 1 | 1 | 1 | 2 | 1.5 |
| Arrangement position of rubber^{*1} (%) | 30 | 20 | 20 | 20 | 20 |
| M25^{*2} (MPa) | 1.30 | 1.21 | 1.44 | 1.35 | 1.36 |
| EB^{*3} (index) | 107 | 102 | 104 | 100 | 101 |
| Temperature increase (°C) | 48 | 52 | 50 | 52 | 51 |
| Number of tests until breakdown (index) | 130 | 111 | 120 | 112 | 115 |

| | | | | | |
|---|---|---|---|---|---|
| ^{*1}: This means the regions where the rubber having a 25% modulus at 25°C of not less than 1.2 MPa was arranged, indicating the percentage (%) of the regions from each outermost end of the belt having the maximum width in the tire width direction to the tire width direction inner side with respect to the total width of the belt. ^{*2}: 25% modulus at 25°C ^{*3}: elongation at break | | | | | |

**[Table 2]**

| | Comparative Example 1 | Comparative Example 2 | Comparative Example 3 | Comparative Example 4 | Comparative Example 5 |
|---|---|---|---|---|---|
| Natural rubber (NR) | 80 | 40 | 100 | 80 | 60 |
| Polybutadiene rubber (BR) | 20 | 60 | 0 | 20 | 40 |
| Carbon black (ISAF) | 45 | 40 | 65 | 50 | 40 |
| Antioxidant (6PPD) | 1 | 1 | 1 | 1 | 1 |
| Wax | 1 | 1 | 1 | 1 | 1 |
| Stearic acid | 2 | 2 | 2 | 2 | 2 |
| Zinc white | 5 | 5 | 5 | 5 | 5 |
| Antioxidant (TMDQ) | 0.3 | 0.3 | 0.3 | 0.3 | 0.3 |
| Vulcanization accelerator (CBS) | 1 | 1 | 1 | 1 | 1 |
| Sulfur | 2 | 2 | 2 | 2 | 2 |
| Process oil | 3 | 3 | 3 | 3 | 3 |
| Fatty acid zinc | - | - | - | - | - |
| Hydrazide compound (BMH) | 0 | 1 | 1 | 0.5 | 0.5 |
| Arrangement position of rubber^{*1} (%) | 10 | 30 | 10 | 10 | 10 |
| M25^{*2} (MPa) | 1.16 | 1.11 | 1.48 | 1.28 | 1.11 |
| EB^{*3} (index) | 100 | 82 | 80 | 92 | 95 |
| Temperature increase (°C) | 55 | 57 | 59 | 57 | 57 |
| Number of tests until breakdown (index) | 100 | 93 | 85 | 93 | 93 |

As seen from Tables 1 and 2, the airplane pneumatic tire of the present invention exhibits improved heat build-up and increased durability.

### DESCRIPTION OF SYMBOLS

1: tread section
2: side wall section
3: bead section
4: carcass
5: belt
5a, 5b, 5c, 5d: belt layer
6: circumferential groove
7: belt reinforcing layer
8: bead core
9: bead filler
10: airplane pneumatic tire (tire)

## Claims

1. An airplane pneumatic tire comprising:
a tread section having a plurality of circumferential grooves;
a carcass toroidally extending from said tread section to a pair of bead sections through a pair of side wall sections; and
a belt composed of at least one belt layer arranged on the outer side of a crown portion of said carcass,
wherein, when the maximum width of said belt in the tire width direction is defined as W, a rubber having a 25% modulus at 25°C of not less than 1.2 MPa is arranged in regions of at least 0.2W from each outermost end of said belt toward the tire width direction inner side in said tread section.

2. The airplane pneumatic tire according to claim 1, wherein said rubber having a 25% modulus at 25°C of not less than 1.2 MPa is composed of a rubber composition comprising, with respect to 100 parts by mass of (A) a rubber component composed of 50 to 100 parts by mass of a natural rubber and/or a synthetic isoprene rubber and 0 to 50 parts by mass of a synthetic diene-based rubber, 40 to 60 parts by mass of (B) a carbon black and 0.8 to 2 parts by mass of (C) a hydrazide compound represented by the following Formula: 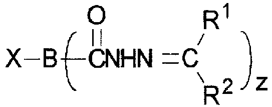 (wherein, B represents a C2 to C18 polyvalent acyclic aliphatic group, a C5 to C20 polyvalent cyclic aliphatic group, a C6 to C18 polyvalent aromatic group, or a C7 to C24 polyvalent alkyl aromatic group; X represents a hydrogen atom, a hydroxy group, an amino group, or a mercapto group; R¹ and R² each independently represent a hydrogen atom, a C1 to C18 alkyl group, a cycloalkyl group, or an aromatic ring; and z represents an integer of 1 to 3).

3. The airplane pneumatic tire according to claim 2, wherein said hydrazide compound is naphthoic acid hydrazide or a derivative thereof.

4. The airplane pneumatic tire according to claim 2, wherein said carbon black has a nitrogen adsorption specific surface area of 140 to 200 m²/g.

5. The airplane pneumatic tire according to claim 2, wherein said carbon black has a dibutyl phthalate absorption of 120 to 200 mL/100 g.

6. The airplane pneumatic tire according to claim 2, wherein 1 to 3 parts by mass of zinc white is contained with respect to 100 parts by mass of said rubber component.
